# EUROPEAN PATENT SPECIFICATION

(11) **EP 1 685 343 B1**
(45) Date of publication and mention of the grant of the patent: **17.06.2009**
(21) Application number: 03782210.3
(22) Date of filing: 18.11.2003
(51) Int. Cl.: F16K 37/00

(54) **APPARATUS FOR THE SUPPLY OR HANDLING OF PRODUCTS AND SENSOR MEANS FOR SUCH APPARATUS**
EINRICHTUNG ZUM VERTEILEN VON PRODUKTEN UND EIN DAFÜR GEEIGNETER SENSOR
APPAREIL POUR L'ALIMENTATION OU LA MANIPULATION DE PRODUITS ET CAPTEUR POUR LEDIT APPAREIL

(43) Date of publication of application: 02.08.2006
(73) Proprietor: ECOLAB INC., St. Paul MN 55102-2233 (US)
(72) Inventor: RUPPERT, Andreas, 83355 Grabenstätt (DE); HEIDUCZEK, Ralf, 83483 Bischofswiesen (DE)
(74) Representative: Gesthuysen, von Rohr & Eggert
(86) International application number: PCT/EP2003/012893
(87) International publication number: WO 2005/050077

(56) References cited:
- EP-A- 0 949 744
- US-A- 4 778 353
- US-A- 5 320 123
- US-A- 5 471 138
- US-A- 5 504 426
- US-A- 5 523 682
- US-A- 5 787 915
- US-B1- 6 321 781

## Description

The present invention relates to an apparatus for the supply or handling of products with the features of the introductory part of claim 1. This apparatus has a sensor means adapted to sense the operating state of an electromagnetic subassembly.

Apparatus in particular to supply liquid or slurried products are well-known from prior art (EP 0 369 722 A1). This prior art in particular relates to a dispensing apparatus for detergents, wetting agents, drying agents, rinse aids or the like for industrial cleaning processes, preferably, but not exclusively in dishwashing machines, bottle washing machines, laundry washing machines or the like.

In apparatus as described before there is normally a large number of electromagnetic subassemblies like drive motors, pump drives and solenoid operated valves. The operating state of those electromagnetic subassemblies must be controlled and this is normally done by a separate control unit of the apparatus. Sensor means for the operating state of the respective electromagnetic subassembly are assigned to the respective subassembly and are connected to the control unit to provide the necessary signal input.

The invention is related to a particular sensor means for such electromagnetic subassembly in an apparatus as described.

In order to sense the operating state of an electromagnetic subassembly normally the supply voltage or the supply current is monitored. This needs a sensor means attached to the electric supply system of the subassembly. This again needs considerable wiring and other efforts. Further, in high voltage applications in particular a number of legal rules must be observed.

In the prior art forming the starting point of the invention (US-A-5 787 915) two Hall-effect sensor means are disposed directly adjacent to the magnetically active part of the electromagnetic subassembly within an outer housing thereof. Integration of those sensors needs an appropriate construction of the electromagnetic subassembly.

The object of the present invention is to provide an apparatus as described before with a sensor means that reduces installation requirements.

In accordance with the invention the apparatus described above is characterized in that the sensor means is a self-contained system separate from the electromagnetic subassembly, and the sensor means is attached to the outside of the housing (13) of the electromagnetic subassembly by means of an attachment strap or, preferably, by means of an adhesive attachment foil. Preferred details are the subject of the sub-claims.

As before in the prior art the magnetic stray field of the electromagnetic subassembly is monitored by a sensor means that is specifically adapted to achieve this effect. This sensor means is now a self-contained Hall-effect sensor means that is separate from, but attached (or attachable) to the electromagnetic subassembly. Installation of such self-contained sensor means is easy, because it needs no connection to the electric supply lines of the electromagnetic subassembly. A galvanic decoupling of the sensor means from the electromagnetic subassembly itself is provided without any additional efforts like an opto-coupler or the like.

The invention is particularly suitable for solenoid valves in an apparatus as described. However, other systems that generate magnetic stray fields can be monitored likewise.

A particularly advantageous version of the sensor means uses an adhesive attachment foil as carrier for the Hall-effect sensor means. Such adhesive attachment foil can be simply adhered to the outside of the electromagnetic subassembly or a housing thereof at a suitable position. Installation of such sensor means is extremely easy.

Other and further advantages and features of the invention will be apparent to those skilled in the art from the following detailed description thereof taken in conjunction with the accompanying drawings. In the drawings
- Fig. 1: is a schematic display of an apparatus according to the invention,
- Fig. 2: is a schematic, sectional view of a preferred embodiment of an elec- tromagnetic subassembly, i. e. a solenoid of a solenoid valve, show- ing a sensor means according to the invention attached to its hous- ing,
- Fig. 3: is a schematic view of a preferred embodiment of a self-contained Hall-effect sensor means according to the invention.

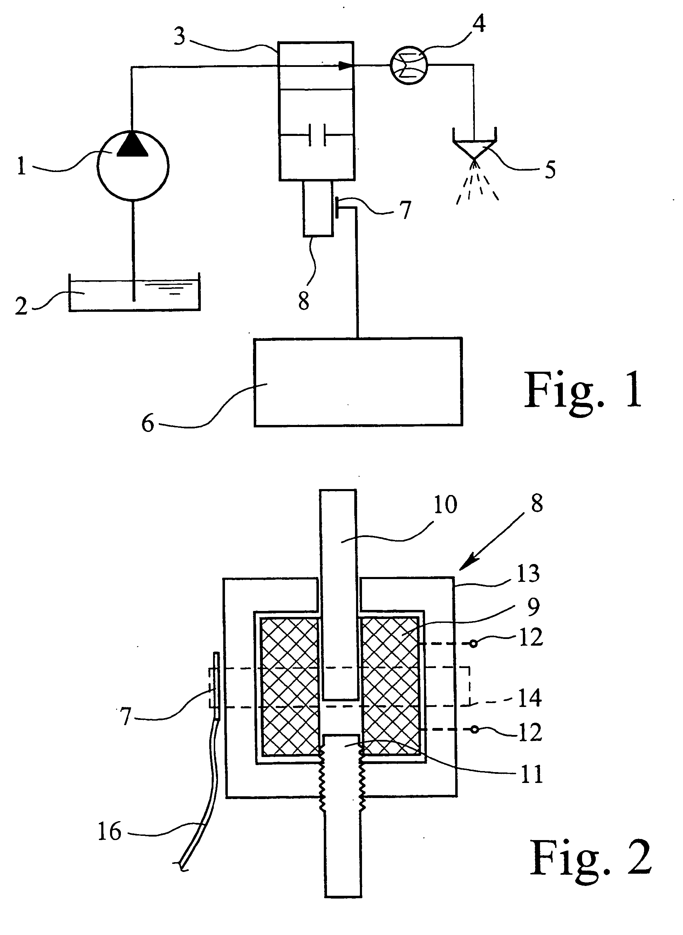

Fig. 1 shows a schematic and highly simplified view of an apparatus for the supply or handling of products, here of a liquid product like a detergent in an industrial cleaning process. For example such apparatus may be part of an industrial dishwashing machine or the like.

This apparatus comprises a liquid pump 1, e. g. a pump for the liquid detergent from a reservoir 2. The liquid pump 1 is started only after an electromagnetic subassembly 3, here a solenoid operated valve, was first moved to its "open" position, Fig. 1 shows such "open" position of the solenoid valve (electromagnetic subassembly 3). In line with the electromagnetic subassembly 3 is positioned a flow meter 4 and, thereafter, a nozzle means 5 intended to generate a spray of liquid detergent e. g. in a washing chamber of a dishwashing machine.

A control unit 6 is connected to the different parts and, in particular, to a sensor means 7 assigned to the electromagnetic subassembly 3. This sensor means 7 is adapted to sense the operating state of the electromagnetic subassembly 3, here the solenoid 8 of the solenoid valve that is the electromagnetic subassembly 3.

Fig. 2 shows in more detail a solenoid 8 of an electromagnetic subassembly 3 with a coil 9, an armature 10 (connected to the valve body of the solenoid valve) an armature stop 11, electric supply lines 12 and a housing 13. This is a sample for an electromagnetic part of an electromagnetic subassembly 3. The movable armature 10 is pulled to a central position limited by the armature stop 11 when the coil 9 is energized by electric current sent through the coil 9 via the electric supply lines 12. This is a usual and well-known system.

The coil 9 generates a magnetic stray field. Fig. 2 shows as a sensor means 7 as self-contained Hall-effect sensor means that is separate from, but attached to the electromagnetic subassembly 3, here the housing 13 of the solenoid 8. This sensor means 7 is monitoring the magnetic stray field of the coil 9 of solenoid 8, i. e. of the electromagnetic subassembly 3. A Hall-effect sensor uses the Hall-effect to give an output voltage portional to the magnetic field strength of the magnetic stray field. The Hall-effect is the effect of development of a transverse electric field in a current-carrying conductor placed in a magnetic field. This effect is used here to monitor the magnetic stray field of the electromagnetic subassembly 3 and thus the status of the electromagnetic subassembly 3 without any need to use the electric supply lines 12 or the like. So there is a galvanic decoupling of the sensor system from the supply system and installation is extremely easy.

Fig. 2 shows a solution where the sensor means 7 is attached to the housing 13 by means of an attachment strap 14.

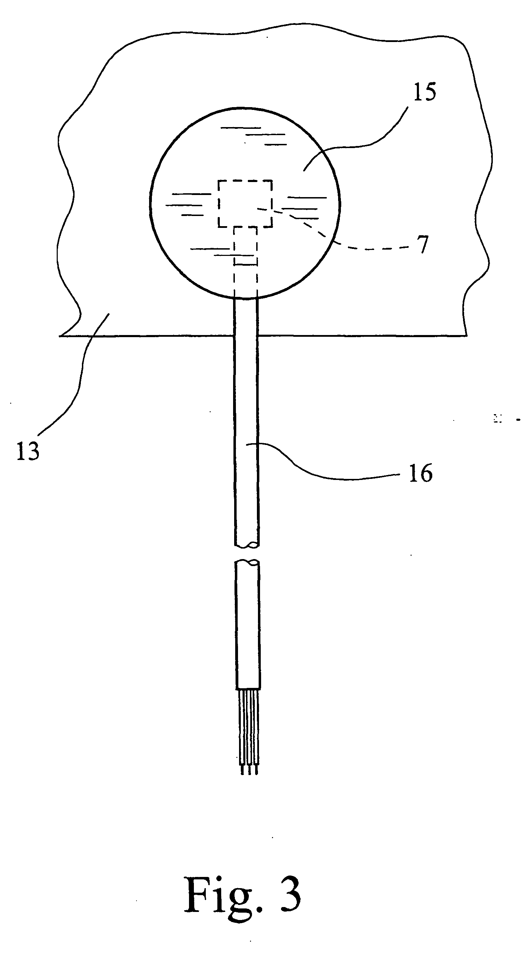

Fig. 3 shows an even better solution that is even easier to install. Here it can be seen that the sensor means 7 is provided with an adhesive attachment foil 15. The Hall-effect sensor means as such is positioned in the middle of a circular piece of adhesive attachment foil 15 which then can be easily adhered to the housing 13 at a convenient location. The diameter of such circular piece of adhesive foil 15 may be a couple of centimetres, e. g. 2 to 3 cm.

Fig. 2 and 3 further show that here the sensor means 7 is provided with a connecting cable 16 for connection with the control unit 6 of the apparatus.

Of course, the self-contained Hall-effect sensor means 7 can be manufactured and sold as such independent of an apparatus, but intended to be applied in connection with an electromagnetically operated unit.

## Claims

1. Apparatus for the supply or handling of products, in particular liquid or slurried products like detergents and rinse aids in industrial cleaning processes,
comprising at least one electromagnetic subassembly (3) like a drive motor, a pump drive or, in particular, a solenoid valve, and a sensor means (7) assigned to the electromagnetic subassembly (3) and adapted to sense the operating state of the electromagnetic subassembly (3),
wherein the sensor means (7) is a Hall-effect sensor means monitoring the magnetic stray field of the electromagnetic subassembly (3),
**characterized in that**
the electromagnetic subassembly (3) comprises a housing (13) that is transmissive for the magnetic stray field of the electromagnetic subassembly (3),
the sensor means (7) is a self-contained system separate from the electromagnetic subassembly (3) and
the sensor means (7) is attached to the outside of the housing (13) of the electromagnetic subassembly (3) by means of an attachment strap (14) or, preferably, by means of an adhesive attachment foil (15).

2. Apparatus according to claim 1, **characterized in that** the sensor means (7) is provided with a connecting cable (16) for connection with a control unit (6) of the apparatus.

3. Apparatus according to any one of the preceding claims, **characterized in that** the apparatus is a dishwashing machine, a bottle washing machine or a laundry washing machine and the electromagnetic subassembly (3) is a solenoid valve of a liquid dispensing system of the machine.

## Patentansprüche

1. Vorrichtung zur Zuführung oder Handhabung von Produkten, insbesondere flüssigen oder schlammigen Produkten wie Reinigungsmitteln und Spülhilfen in industriellen Reinigungsprozessen, umfassend mindestens eine elektromagnetische Unterbaugruppe (3) wie einen Antriebsmotor, einen Pumpenantrieb
oder insbesondere ein Magnetventil und ein Sensormittel (7), das der elektromagnetischen Unterbaugruppe (3) zugeordnet und zur Erfassung des Betriebszustands der elektromagnetischen Unterbaugruppe (3) ausgeführt ist,
wobei das Sensormittel (7) ein Halleffektsensormittel ist, das das magnetische Streufeld der elektromagnetischen Unterbaugruppe (3) überwacht,
**dadurch gekennzeichnet, dass**
die elektromagnetische Unterbaugruppe (3) ein Gehäuse (13) umfasst, das für das magnetische Streufeld der elektromagnetischen Unterbaugruppe (3) durchlässig ist,
das Sensormittel (7) ein selbstständiges System ist, das von der elektromagnetischen Unterbaugruppe (3) getrennt ist, und
das Sensormittel (7) mittels eines Befestigungsbands (14) oder vorzugsweise mittels einer Klebefestigungsfolie (15) an der Außenseite des Gehäuses (13) der elektromagnetischen Unterbaugruppe (3) befestigt ist.

2. Vorrichtung nach Anspruch 1, **dadurch gekennzeichnet, dass** das Sensormittel (7) mit einem Verbindungskabel (16) zur Verbindung mit einer Steuereinheit (6) der Vorrichtung versehen ist.

3. Vorrichtung nach einem der vorhergehenden Ansprüche, **dadurch gekennzeichnet, dass** die Vorrichtung ein Geschirrspüler, eine Flaschenwaschmaschine oder eine Waschmaschine für Wäsche ist und das die elektromagnetische Unterbaugruppe (3) ein Magnetventil eines Flüssigkeitsabgabesystems der Maschine ist.

## Revendications

1. Appareil pour l'alimentation ou la manipulation de produits, en particulier des produits liquides ou en bouillie tels que des détergents et des fluides de rinçage dans les processus de nettoyage industriels,
comprenant au moins un sous-ensemble électromagnétique (3) tel qu'un moteur d'entraînement, un entraînement de pompe ou en particulier une électrovanne, et un moyen de capteur (7) affecté au sous-ensemble électromagnétique (3) et prévu pour détecter l'état de fonctionnement du sous-ensemble électromagnétique (3),
dans lequel le moyen de capteur (7) est un capteur à effet de Hall contrôlant le champ magnétique parasite du sous-ensemble électromagnétique (3),
**caractérisé en ce que**
le sous-ensemble électromagnétique (3) comprend un logement (13) qui est transmissif vis-à-vis du champ magnétique parasite du sous-ensemble électromagnétique (3),
le moyen de capteur (7) est un système autonome séparé du sous-ensemble électromagnétique (3) et le moyen de capteur (7) est attaché à l'extérieur du logement (13) du sous-ensemble électromagnétique (3) au moyen d'une sangle de fixation (14), ou de préférence, au moyen d'un film de fixation adhésif (15).

2. Appareil selon la revendication 1, **caractérisé en ce que** le moyen de capteur (7) est pourvu d'un câble de connexion (16) pour la connexion à une unité de commande (6) de l'appareil.

3. Appareil selon l'une quelconque des revendications précédentes, **caractérisé en ce que** l'appareil est un lave-vaisselle, une machine à laver les bouteilles ou une machine à laver le linge et le sous-ensemble électromagnétique (3) est une électrovanne d'un système de distribution de liquide de la machine.
